# EUROPEAN PATENT APPLICATION

(11) **EP 4 250 816 A1**
(43) Date of publication of application: **27.09.2023**
(21) Application number: 21893604.5
(22) Date of filing: 29.09.2021
(51) Int. Cl.: H04W 36/00, H04W 36/08, H04W 36/30

(54) **CELL MEASUREMENT METHOD, RADIO COMMUNICATION APPARATUS AND STORAGE MEDIUM**

(30) Priority: 23.11.2020 CN 202011323018
(71) Applicant: GUANGDONG OPPO MOBILE TELECOMMUNICATIONS CORP., LTD., Dongguan, Guangdong 523860 (CN)
(72) Inventor: LIU, Jun, Dongguan, Guangdong 523860 (CN)
(74) Representative: Penza, Giancarlo
(86) International application number: PCT/CN2021/121688
(87) International publication number: WO 2022/105454

(57) **Abstract**

Disclosed are a cell measurement method, a radio communication apparatus and a storage medium. The radio communication apparatus comprises: a first physical-layer module and a protocol stack module, wherein the first physical-layer module and the protocol stack module are in an idle mode. The method comprises: when a first physical-layer module is switched from a dormant state to a wake-up state, and receives paging, the first physical-layer module determining target neighboring frequency points on the basis of acquired first measurement configuration information; the first physical-layer module performing signal quality measurement on neighboring cells on each of the target neighboring frequency points, and evaluating obtained neighboring cell measurement results; and when an evaluation result indicates that the neighboring cells comprise a reselectable cell, the first physical-layer module generating measurement feedback information on the basis of a first measurement result, which corresponds to the reselectable cell, in the neighboring cell measurement results, and sending the measurement feedback information to a protocol stack module.

## Description

### CROSS-REFERENCE TO RELATED APPLICATION

The present disclosure is based on Chinese patent application No. CN 202011323018.7 filed on November 23, 2020, entitled "CELL MEASUREMENT METHOD, RADIO COMMUNICATION APPARATUS AND STORAGE MEDIUM" and claims priority to the Chinese patent application, and the content of to the Chinese patent application is hereby incorporated by reference in its entirety.

### TECHNICAL FIELD

Embodiments of the present disclosure relate to the field of communication technologies, in particularly, to a cell measurement method, a radio communication apparatus, and a storage medium.

### DESCRIPTION OF RELATED ART

When radio resource control (RRC) is in an idle state, radio communication apparatuses, such as mobile phones and tablet computers, need to continuously perform cell measurement to make determination of cell reselection, to reselect to a cell suitable for residence.

At present, under radio resource control (RRC) idle state, the radio communication apparatuses mainly adopt two solutions for performing the cell measurement, one is a joint measurement through a physical layer and a protocol stack, and the other is an independent measurement of the physical layer. For the joint measurement, it needs frequent interactions between the physical layer and the protocol stack, while for the independent measurement of the physical layer, considering that each radio access technology has its corresponding physical layer entity, it needs frequent interactions between different physical layers. Since the two measurement solutions actually need frequent information interactions, the power consumption of the radio communication apparatuses is high.

### SUMMARY

The embodiments of the present disclosure provide a cell measurement method, a radio communication apparatus, and a storage medium, which reduce the power consumption of the radio communication apparatus.

The technical solutions of the embodiments of the present disclosure are realized as follows.

An embodiment of the present disclosure provides a cell measurement method, the radio communication apparatus includes a first physical layer module and a protocol stack module, the first physical layer module and the protocol stack module are in an idle mode, and the method includes:
determining, by the first physical layer module, target neighbor frequency points on the basis of acquired first measurement configuration information, in response to switching from a sleep state to a wake-up state and receiving paging;
measuring, by the first physical module, signal quality of neighbor cells on each of the target neighbor frequency points, and evaluating obtained neighbor cell measurement results; and
in response to an evaluation result being the neighbor cells including a reselectable cell, generating, by the first physical layer module, measurement feedback information on the basis of a first measurement result corresponding to the reselectable cell of the neighbor cell measurement results, and sending the measurement feedback information to the protocol stack module.

An embodiment of the present disclosure provides a radio communication apparatus including a first physical layer module and a protocol stack module, the first physical layer module and the protocol stack module are in an idle mode;
the first physical layer module is configured to: determine target neighbor frequency points on the basis of acquired first measurement configuration information, in response to switching from a sleep state to a wake-up state and receiving paging; measure signal quality of neighbor cells on each of the target neighbor frequency points, and evaluate obtained neighbor cell measurement results; and in response to an evaluation result being the neighbor cells including a reselectable cell, generate measurement feedback information on the basis of a first measurement result corresponding to the reselectable cell of the neighbor cell measurement results, and send the measurement feedback information to the protocol stack module.

An embodiment of the present disclosure provides a computer-readable storage medium having stored a computer program therein, the computer program is configured to, when executed by a processor, implement the above cell measurement method.

### BRIEF DESCRIPTION OF DRAWINGS

FIG. 1 illustrates a schematic flow chart of a cell measurement method according to an embodiment of the present disclosure.
FIG. 2 illustrates a schematic interaction view of a physical layer module and a protocol stack module according to an embodiment of the present disclosure.
FIG. 3 illustrates a schematic flow chart of a cell reselection process implemented by a protocol stack module according to an embodiment of the present disclosure.
FIG. 4 illustrates a schematic structural view of a radio communication apparatus according to an embodiment of the present disclosure.

### DETAILED DESCRIPTION OF EMBODIMENTS

In a first aspect, an embodiment of the present disclosure provides a cell measurement, which is implemented by a radio communication apparatus, the radio communication apparatus includes a first physical layer module and a protocol stack module, the first physical layer module and the protocol stack module are in an idle mode, and the method includes:
determining, by the first physical layer module, target neighbor frequency points on the basis of acquired first measurement configuration information, in response to switching from a sleep state to a wake-up state and receiving paging;
measuring, by the first physical module, signal quality of neighbor cells on each of the target neighbor frequency points, and evaluating obtained neighbor cell measurement results; and
in response to an evaluation result being the neighbor cells including a reselectable cell, generating, by the first physical layer module, measurement feedback information on the basis of a first measurement result corresponding to the reselectable cell of the neighbor cell measurement results, and sending the measurement feedback information to the protocol stack module.

In an embodiment of the present disclosure, before the determining, by the first physical layer module, target neighbor frequency points on the basis of acquired first measurement configuration information, in response to switching from a sleep state to a wake-up state and receiving paging, the method further includes:
in response to the protocol stack module and the first physical layer module entering the idle mode, determining, by the protocol stack module, the first measurement configuration information according to a radio access technology corresponding to the first physical layer module, and sending the first measurement configuration information to the first physical layer module;
in response to having sent the first measurement configuration information, entering, by the protocol stack module, the sleep state; and
in response to receiving the first measurement configuration information, entering, by the first physical layer module, the sleep state.

In an embodiment of the present disclosure, the determining, by the first physical layer module, target neighbor frequency points on the basis of acquired first measurement configuration information includes:
in response to matching with a current serving cell, measuring, by the first physical layer module, signal quality of the current serving cell to obtain a second measurement result;
determining, by first physical layer module, a cell selection criterion on the basis of a cell selection criteria parameter of the first measurement configuration information;
in response to the second measurement result meeting the cell selection criterion, selecting, by the first physical layer module, high-priority neighbor frequency points from preset neighbor frequency points of the first measurement configuration information, and determining the selected frequency points as the target neighbor frequency points; and
in response to the second measurement result not meeting the cell selection criterion, determining, by the first physical layer module, the preset neighbor frequency points as the target neighbor frequency points.

In an embodiment of the present disclosure, where the determining, by the first physical layer module, target neighbor frequency points on the basis of acquired first measurement configuration information includes:
in response to not matching with the current serving cell, determining, by the first physical layer module, preset neighbor frequency points of the first measurement configuration information as the target neighbor frequency points.

In an embodiment of the present disclosure, the measuring, by the first physical module, signal quality of neighbor cells on each of the target neighbor frequency points includes:
checking, by the first physical layer module, a first detection period corresponding to a first neighbor frequency point of the first measurement configuration information, and detecting a cell on the first neighbor frequency point within the first detection period to obtain a first cell, the first neighbor frequency point being any one of the target neighbor frequency points; and
updating, by the first physical layer module, a first measurement period corresponding to the first neighbor frequency point of the first measurement configuration information, and measuring signal quality of the first cell within the updated first measurement period to obtain a partial measurement result of the neighbor cell measurement results.

In an embodiment of the present disclosure, the evaluating obtained neighbor cell measurement results includes:
checking, by the first physical layer module, an evaluation period of the first measurement configuration information, and evaluating the neighbor cell measurement results within the evaluation period to obtain the evaluation result.

In an embodiment of the present disclosure, the generating, by the first physical layer module, measurement feedback information on the basis of a first measurement result corresponding to the reselectable cell of the neighbor cell measurement results includes:
in response to matching with a current serving cell, obtaining, by the first physical layer module, a second measurement result corresponding to the current serving cell, and generating the measurement feedback information according to the first measurement result and the second measurement result.

In an embodiment of the present disclosure, after the generating, by the first physical layer module, measurement feedback information on the basis of a first measurement result corresponding to the reselectable cell of the neighbor cell measurement results, and sending the measurement feedback information to the protocol stack module, the method further includes:
in response to receiving the measurement feedback information, switching, by the protocol stack module, from the sleep state to a partial wake-up state; and
in the partial wake-up state, making, by the protocol stack module, cell reselection decision on the basis of the measurement feedback result.

In an embodiment of the present disclosure, the making, by the protocol stack module, cell reselection decision on the basis of the measurement feedback result includes:
parsing, by the protocol stack module, the measurement feedback result to obtain a parsing result;
performing, by the protocol stack module, reselection parsing on the basis of the parsing result to obtain a reselection parsing result;
in response to the reselection parsing result being reselection, switching, by the protocol stack module, from the partial wake-up state to a fully wake-up state , and performing cell reselection in the fully wake-up state; and
in response to the reselection parsing result being not reselection, switching, by the protocol stack module, from the partial wake-up state to the sleep state.

In an embodiment of the present disclosure, the method further includes: sending, by the protocol stack module, mode indication information to the first physical layer module when making the cell reselection decision on the basis of the measurement feedback result;
where the mode indication information is configured to instruct the first physical layer module to directly send a measurement result obtained by measuring the neighbor cells after the neighbor cell measurement results to the protocol stack module.

In an embodiment of the present disclosure, after the measuring, by the first physical module, the signal quality of neighbor cells on each of the target neighbor frequency points, and evaluating obtained neighbor cell measurement results, the method further includes:
in response to the evaluation result being the neighbor cells not including the reselectable cell, switching, by first physical layer module from the wake-up state to the sleep state.

In an embodiment of the present disclosure, the radio communication apparatus further includes a second physical layer module, the second physical layer module is in the idle mode, and the method further includes:
in response to allocating a radio frequency resource and the first physical layer module having completed cell measurement, switching, by the second physical layer module, from the sleep state to the wake-up state and receiving paging; and
in the wake-up state, performing, by the second physical layer module, cell measurement on the basis of second measurement configuration information sent by the protocol stack module when the second physical layer module enters the idle mode.

In a second aspect, an embodiment of the present disclosure provides a radio communication apparatus, including a first physical layer module and a protocol stack module, the first physical layer module and the protocol stack module being in an idle mode; and the first physical layer module is configured to:
determine target neighbor frequency points on the basis of acquired first measurement configuration information, in response to switching from a sleep state to a wake-up state and receiving paging;
measure signal quality of neighbor cells on each of the target neighbor frequency points, and evaluate obtained neighbor cell measurement results; and
in response to an evaluation result being the neighbor cells including a reselectable cell, generate measurement feedback information on the basis of a first measurement result corresponding to the reselectable cell of the neighbor cell measurement results, and send the measurement feedback information to the protocol stack module.

In an embodiment of the present disclosure, the protocol stack module is further configured to: in response to the protocol stack module and the first physical layer module entering the idle mode, determine the first measurement configuration information according to a radio access technology corresponding to the first physical layer module, and send the first measurement configuration information to the first physical layer module; and in response to having sent the first measurement configuration information, enter the sleep state; and
the first physical layer module is further configured to: in response to receiving the first measurement configuration information, enter the sleep state.

In an embodiment of the present disclosure, the first physical layer module is specifically configured to:
in response to matching with a current serving cell, measure signal quality of the current serving cell to obtain a second measurement result;
determine a cell selection criterion on the basis of a cell selection criteria parameter of the first measurement configuration information;
in response to the second measurement result meeting the cell selection criterion, select high-priority neighbor frequency points from preset neighbor frequency points of the first measurement configuration information, and determine the selected frequency points as the target neighbor frequency points; and
in response to the second measurement result not meeting the cell selection criterion, determine the preset neighbor frequency points as the target neighbor frequency points.

In an embodiment of the present disclosure, the first physical layer module is specifically configured to: in response to not matching with the current serving cell, determine preset neighbor frequency points of the first measurement configuration information as the target neighbor frequency points.

In an embodiment of the present disclosure, the first physical layer module is specifically configured to:
check a first detection period corresponding to a first neighbor frequency point of the first measurement configuration information, and detect a cell on the first neighbor frequency point within the first detection period to obtain a first cell, the first neighbor frequency point being any one of the target neighbor frequency points; and
update a first measurement period corresponding to the first neighbor frequency point of the first measurement configuration information, and measure signal quality of the first cell within the updated first measurement period to obtain a partial measurement result of the neighbor cell measurement results.

In an embodiment of the present disclosure, the first physical layer module is specifically configured to:
check an evaluation period of the first measurement configuration information, and evaluating the neighbor cell measurement results within the evaluation period to obtain the evaluation result.

In an embodiment of the present disclosure, the first physical layer module is specifically configured to:
in response to matching with a current serving cell, obtain a second measurement result corresponding to the current serving cell, and generate the measurement feedback information according to the first measurement result and the second measurement result.

In an embodiment of the present disclosure, the protocol stack module is configured to: in response to receiving the measurement feedback information, switch from the sleep state to a partial wake-up state; and in the partial wake-up state, make cell reselection decision on the basis of the measurement feedback result.

In an embodiment of the present disclosure, the protocol stack module is specifically configured to:
parse the measurement feedback result to obtain a parsing result;
perform reselection parsing on the basis of the parsing result to obtain a reselection parsing result;
in response to the reselection parsing result being reselection, switch from the partial wake-up state to a fully wake-up state , and performing cell reselection in the fully wake-up state; and
in response to the reselection parsing result being not reselection, switch from the partial wake-up state to the sleep state.

In an embodiment of the present disclosure, the protocol stack module is further configured to:
send mode indication information to the first physical layer module when making the cell reselection decision on the basis of the measurement feedback result;
where the mode indication information is configured to instruct the first physical layer module to directly send a measurement result obtained by measuring the neighbor cells after the neighbor cell measurement results to the protocol stack module.

In an embodiment of the present disclosure, the first physical layer module is configured to: in response to the evaluation result being the neighbor cells not including the reselectable cell, switch from the wake-up state to the sleep state.

In an embodiment of the present disclosure, the radio communication apparatus further includes a second physical layer module, the second physical layer module is in the idle mode, and the second physical layer module is configured to:
in response to allocating a radio frequency resource and the first physical layer module having completed cell measurement, switch from the sleep state to the wake-up state and receiving paging; and
in the wake-up state, perform cell measurement on the basis of second measurement configuration information sent by the protocol stack module when entering the idle mode.

In a third aspect, an embodiment of the present disclosure provides a computer-readable storage medium having stored a computer program therein, the computer program is configured to, when executed by a processor, implement the above cell measurement method.

In order to make objectives, technical solutions and advantages of the present disclosure more clear, the present disclosure will be further described in detail combined with accompanying drawings and embodiments. It should be understood that the specific embodiments described herein are merely used to explain the present disclosure, and are not used to limit the present disclosure.

An embodiment of the present disclosure provides a cell measurement method, and the cell measurement method may be implemented by a radio communication apparatus. The radio communication apparatus includes a first physical layer module and a protocol stack module, where each of the first physical layer module and the protocol stack module is in an idle mode.

It should be noted that in the embodiment of the present disclosure, the radio communication apparatus may include multiple physical layer modules, each of the multiple physical layer modules corresponds to a type of radio communication technology, and the first physical layer module in the embodiment of the present disclosure may be any one of the multiple physical layer modules. Specifically, the radio communication apparatus may be an electronic device such as a mobile phone and a tablet computer, which is not limited in the embodiment of the present disclosure.

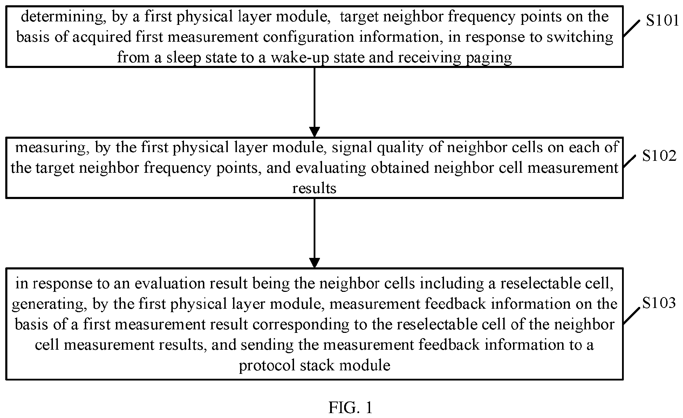

FIG. 1 illustrates a schematic flow chart of the cell measurement method according to the embodiment of the present disclosure. As illustrated in FIG. 1, in the embodiment of the present disclosure, the cell measurement method may mainly include block S101 to block S103.

At block S 101, the first physical layer module determines target neighbor frequency points on the basis of acquired first measurement configuration information, in response to switching from a sleep state to a wake-up state and receiving paging.

In the embodiment of the present disclosure, the first physical layer module of the radio communication apparatus may determine the target neighbor frequency points on the basis of the acquired first measurement configuration information, in response to switching from the sleep state to the wake-up state and receiving the paging.

It should be noted that in the embodiment of the present disclosure, when the first physical layer module is in the sleep state in the idle mode, time is counted; when a specific time interval is reached, the sleep state is switched to the wake-up state to receive the paging. In some embodiments, the specific time interval is pre-configured, which is not limited the embodiments of the present disclosure.

It should be noted that, in the embodiment of the present disclosure, before the first physical layer module determines the target neighbor frequency points on the basis of the acquired first measurement configuration information, in response to switching from the sleep state to the wake-up state and receiving the paging, the cell measurement method includes: determining, by the protocol stack module, the first measurement configuration information according to a radio access technology corresponding to the first physical layer module, in response to the protocol stack module and the first physical layer module entering the idle mode, and sending the first measurement configuration information to the first physical layer module; entering, by the protocol stack module, the sleep state, in response to having sent the first measurement configuration information; and entering, by the first physical layer module, the sleep state, in response to receiving the first measurement configuration information.

It can be understood that in the embodiment of the present disclosure, when the protocol stack module and the first physical layer module enter the idle mode, the protocol stack module may send the first measurement configuration information matched with the radio access technology corresponding to the first physical layer module, and enter the sleep state in the idle mode after sending the first measurement configuration information; and correspondingly, the first physical layer module may also enter the sleep state after receiving the corresponding first measurement configuration information, which reduces the power consumption of the radio communication apparatus.

It should be noted that in the embodiment of the present disclosure, the first measurement configuration information may include information such as a cell selection parameter, a detection period, a measurement period and an evaluation period corresponding to the first physical layer module. The first measurement configuration information is not limited in the embodiment of the present disclosure.

In at least one embodiment of the present disclosure, the determining, by the first physical layer module, target neighbor frequency points on the basis of acquired first measurement configuration information includes: measuring, by the first physical layer module, signal quality of a current serving cell to obtain a second measurement result, in response to matching with the current serving cell; determining, by the first physical layer module, a cell selection criterion on the basis of the cell selection criteria parameter of the first measurement configuration information; selecting, by the first physical layer module, high-priority neighbor frequency points from preset neighbor frequency points of the first measurement configuration information, in response to the second measurement result meeting the cell selection criterion, and determining the selected high-priority neighbor frequency points as the target neighbor frequency points; and determining, by the first physical layer module, the preset neighbor frequency points as the target neighbor frequency points, in response to the second measurement result not meeting the cell selection criterion.

It should be noted that in the embodiment of the present disclosure, the first physical layer module matching with the current serving cell means that the first physical layer module and the current serving cell correspond to a same radio access technology. The current serving cell is a cell where the radio communication apparatus currently resides. The current serving cell is not limited in the embodiment of the present disclosure.

It can be understood that in the embodiment of the present disclosure, when the first physical layer module matches with the current serving cell, the first physical layer module can measure signal quality of the current serving cell, to obtain the second measurement result. In addition, the first measurement configuration information includes the cell selection criteria parameter corresponding to the first physical layer module and the preset neighbor frequency points, therefore, the first physical layer module can determine the corresponding cell selection criterion on the basis of the cell selection criteria parameter, so as to determine whether the second measurement result meets the cell selection criterion and determine the target neighbor frequency points on the basis of the preset neighbor frequency points.

It should be noted that in the embodiment of the present disclosure, the measuring signal quality of the current serving cell by the first physical layer module may mean measuring a synchronization signal based reference signal received power (SS-RSRP) and a synchronization signal based reference signal received quality (SS-RSRQ), and the acquired SS-RSRP and SS-RSRQ are the second measurement result.

Specifically, in at least one embodiment of the present disclosure, the determining, by the first physical layer module, target neighbor frequency points on the basis of acquired first measurement configuration information includes: determining, by the first physical layer module, preset neighbor frequency points of the first measurement configuration information as the target neighbor frequency points, in response to not matching with the current serving cell.

It can be understood that in the embodiment of the present disclosure, the first physical layer module may directly take the preset neighbor frequency points of the first measurement configuration information as the target neighbor frequency points, when the first physical layer module does not match with the current serving cell, so as to perform subsequent cell measurement.

At block S 102, the first physical layer module measures signal quality of neighbor cells on each of the target neighbor frequency points, and evaluates obtained neighbor cell measurement results.

In the embodiment of the present disclosure, after determining the target neighbor frequency points, the first physical layer module of the radio communication apparatus further measures signal quality of the neighbor cells on each of the target neighbor frequency points, and evaluates the obtained neighbor cell measurement results (i.e., the measurement results of the neighbor cells).

In at least one embodiment of present disclosure, the measuring, by the first physical layer module, the signal quality of the neighbor cells on each of the target neighbor frequency points includes: checking, by the first physical layer module, a first detection period corresponding to a first neighbor frequency point of the first measurement configuration information, and detecting a cell on the first neighbor frequency point within the first detection period to obtain a first cell, the first neighbor frequency point being any one of the target neighbor frequency points; and updating, by the first physical layer module, a first measurement period corresponding to the first neighbor frequency point of the first measurement configuration information, and measuring signal quality of the first cell within the updated first measurement period to obtain a partial measurement result of the neighbor cell measurement results.

It should be noted that, in the embodiment of the present disclosure, filtering of the neighbor cell measurement results is implicitly achieved during measuring by the first physical layer module the signal quality of the neighbor cells on each of the target neighbor frequency points, therefore, it is not necessary for the protocol stack module to filter again in the future, which reduces the power consumption of the protocol stack module.

It should be noted that in the embodiment of the present disclosure, the first measurement configuration information includes a detection period and a measurement period corresponding to each of the preset neighbor frequency points, and the target neighbor frequency points are actually part or all of the preset neighbor frequency points, therefore, the first physical layer module can perform corresponding operations on each of the target neighbor frequency points on the basis of the corresponding periods, that is, detecting the neighbor cells and measuring signal quality of the neighbor cells. The detection period and the measurement period are not limited in the embodiment of the present disclosure.

It should be noted that in at least one embodiment of the present disclosure, measuring signal quality of the first cell by the first physical layer module may mean measuring corresponding SS-RSRP and SS-RSRQ. That is to say, the first physical layer module can actually measure the corresponding SS-RSRP and SS-RSRQ for the neighbor cells on each of the target neighbor frequency points, and the SS-RSRP and SS-RSRQ of all neighbor cells constitutes the neighbor cell measurement results.

In at least one embodiment of the present disclosure, the evaluating, by the first physical layer module, the obtained neighbor cell measurement results includes: checking, by the first physical layer module, an evaluation period of the first measurement configuration information, and evaluating the neighbor cell measurement results within the evaluation period to obtain an evaluation result.

It can be understood that in the embodiment of the present disclosure, the target neighbor frequency points may include multiple frequency points, and the first physical layer module can perform corresponding cell detection and measurement for each of the multiple frequency points, and evaluate the obtained neighbor cell measurement results as a whole to obtain the evaluation result. In some embodiments, a specific evaluation method of the first physical layer module may be finding out whether there is a cell that can be reselected in the neighbor cells according to the neighbor cell measurement results, when there is a cell that can be reselected in the neighbor cells, the cell is reselected.

At block S 103, in response to the evaluation result being the neighbor cells including a reselectable cell, the first physical layer module generates measurement feedback information on the basis of a first measurement result corresponding to the reselectable cell of the neighbor cell measurement results, and sends the measurement feedback information to the protocol stack module.

In the embodiment of the present disclosure, in response to the evaluation result being the neighbor cells including the reselectable cell, the first physical layer module may generate the measurement feedback information on the basis of the first measurement result corresponding to the reselectable cell of the neighbor cell measurement results, and send the measurement feedback information to the protocol stack module.

It should be noted that in the embodiment of the present disclosure, a measurement result corresponding to the reselectable cell of the neighbor cell measurement results is the first measurement result. In addition, the reselectable cell may be one or more than one in number, and the reselectable cell and the number of reselectable cell are not limited in the embodiment of the present disclosure.

In at least one embodiment of the present disclosure, the generating, by the first physical layer module, the measurement feedback information on the basis of the first measurement result corresponding to the reselectable cell of the neighbor cell measurement results includes: in response matching with the current serving cell, obtaining, by the first physical layer module, a second measurement result corresponding to the current serving cell, and generating the measurement feedback information according to the first measurement result and the second measurement result.

It can be understood that in the embodiment of the present disclosure, when the first physical layer module matches with the current serving cell, the first physical layer module actually measures the signal quality of the current serving cell in the process of determining the target neighbor frequency, and obtains the second measurement result. Therefore, when the measurement feedback information is generated, the second measurement result can be combined with the first measurement result to generate the measurement feedback information. Further, when the first physical layer does not match with the current serving cell, the first physical layer can directly generate the measurement feedback information according to the first measurement result.

In an embodiment of the present disclosure, after the first physical layer module of the radio communication apparatus sends the measurement feedback information to the protocol stack module, the cell measurement method further includes: switching, by the protocol stack module of the radio communication apparatus, from the sleep state to a partial wake-up state, in response to receiving the first measurement result; and making, by the protocol stack module, cell reselection decision on the basis of the measurement feedback result in the partially wake-up state.

It can be understood that in the embodiment of the present disclosure, after the protocol stack module enters the idle mode and sends the first measurement configuration information to the first physical layer module, the protocol stack module enters the sleep state until the measurement feedback information is received. However, in an actual application process, in most cases, the evaluation result of the first physical layer module is that the neighbor cells do not include a reselectable cell, as such, the first physical layer module does not generate the measurement feedback information and does not send the measurement feedback information to the protocol stack module, and the protocol stack module will be in the sleep state for a long time. Compared with the situation in the related art that the first physical layer module and the protocol stack module frequently interact and the protocol stack module needs to be in the wake-up state for a long time, in the present disclosure, the power consumption of the radio communication apparatus is reduced.

In at least one embodiment of the present disclosure, the making, by the protocol stack module, the cell reselection decision on the basis of the measurement feedback result includes: parsing, by the protocol stack module, the measurement feedback result to obtain a parsing result; performing, by the protocol stack module, reselection parsing on the basis of the parsing result to obtain a reselection parsing result; in response to the reselection parsing result being reselection, switching, by the protocol stack module, from the partial wake-up state to a fully wake-up state, and performing cell reselection in the fully wake-up state; and in response to the reselection parsing result being not reselection, switching, by the protocol stack module, from the partial wake-up state to the sleep state.

It can be understood that in the embodiment of the present disclosure, the protocol stack module can switch from the partial wake-up state to the fully wake-up state, in response to the reselection parsing result being reselection, and thus can perform cell reselection under the condition of complete performance, and can switch from the partial wake-up state to the sleep state again to reduce power consumption in response to the reselection parsing result being not reselection.

It should be noted that in the embodiment of the present disclosure, there may be multiple physical layer modules in the radio communication apparatus, each of the multiple physical layer modules corresponds to a type of radio access technology, and each physical layer module may perform the above measurement process, so as to send corresponding measurement configuration information to the protocol stack module in case that a corresponding condition is met, and correspondingly, the measurement configuration information received by the protocol stack module may be multiple, and thus corresponding resolution, parsing and decision are made.

It should be noted that in at least one embodiment of the present disclosure, when making cell reselection decision on the basis of the measurement feedback result, the protocol stack module sends mode indication information to the first physical layer module, where the mode indication information is configured to instruct the first physical layer module to directly send a measurement result obtained by measuring the neighbor cells after the neighbor cell measurement results to the protocol stack module.

It can be understood that in at least one embodiment of the present disclosure, when making cell reselection decision, the protocol stack module may instruct the first physical layer module to measure signal quality of a cell through the same process thereafter to obtain a measurement result, and send the measurement result directly to the protocol stack module without evaluating the measurement result again to generate corresponding feedback information.

In at least one embodiment of the present disclosure, after the first physical layer module measures signal quality of neighbor cells on each of the target neighbor frequency points, and evaluates obtained neighbor cell measurement results, the cell measurement method further includes: switching, by the first physical layer module, from the wake-up state to the sleep state, in response the evaluation result being the neighbor cells not including a reselectable cell.

It can be understood that, in the embodiment of the present disclosure, after the first physical layer module measures signal quality of the neighbor cells, and evaluates obtained neighbor cell measurement results, when the evaluation result is that the neighbor cells do not include a reselectable cell, that is, none of the neighbor cells may act as a serving cell, the first physical layer module can directly switch to the sleep state without reporting relevant information to the protocol stack module, which means that the protocol stack module can still be in the previous sleep state.

It should be noted that in at least one embodiment of the present disclosure, the radio communication apparatus may further include a second physical layer module, which is in an idle mode. The second physical layer module is configured to switch from a sleep state to a wake-up state and receive paging, when the first physical layer module completes cell measurement and the second physical layer module is allocated with a radio frequency resource; and the second physical layer module is configured to, in the wake-up state, perform cell measurement on the basis of second measurement configuration information sent by the protocol stack module when entering the idle mode.

It should be noted that in the embodiment of the present disclosure, the second physical layer module is different from the first physical layer module, and a radio frequency resource is occupied by the first physical layer module, when the first physical layer module performs the cell measurement, therefore, only after the cell measurement is completed by the first physical layer module, the radio frequency resource can be allocated to the second physical layer module for further performing corresponding cell measurement.

It should be noted that in the embodiment of the present disclosure, similar to the first physical layer module, when the second physical layer module enters the idle mode, the protocol stack module can also determine the second measurement configuration information according to a radio access technology corresponding to the second physical layer module, and send the second measurement configuration information to the second physical layer module for the second physical layer module to realize the subsequent cell measurement.

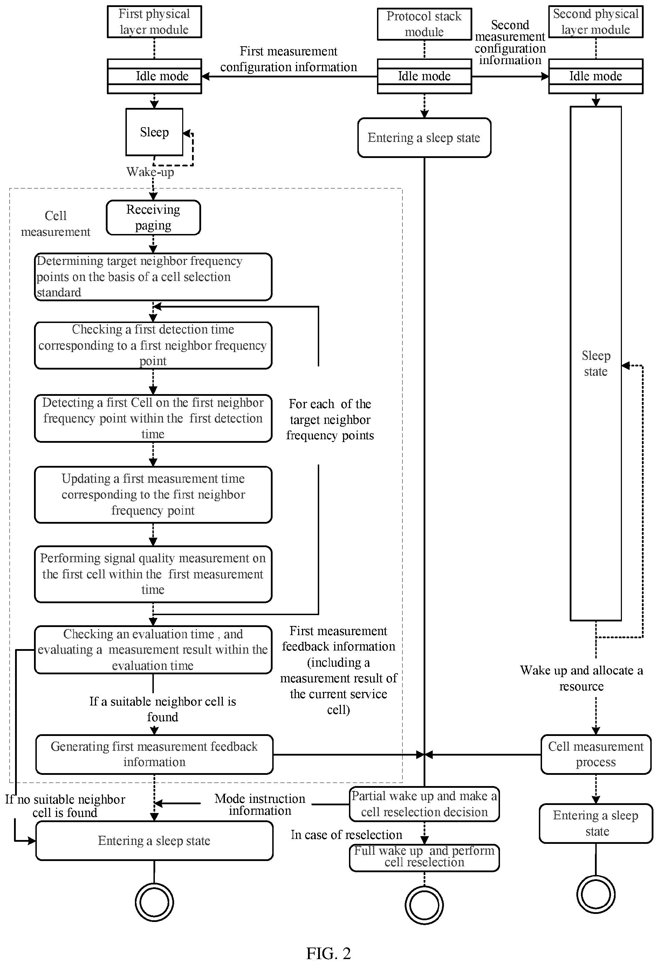

FIG. 2 illustrates a schematic interaction view of a physical layer module and a protocol stack module according to an embodiment of the present disclosure. As illustrated in FIG. 2, the radio communication apparatus includes two physical layer modules and a protocol stack module. The two physical layer modules are a first physical layer module and a second physical layer module, which correspond to different radio access technologies. In addition, the first physical layer module matches with a current serving cell. As illustrated in FIG. 2, in process connection lines, a dotted line corresponds to a sleep state and a solid line corresponds to a wake-up state. When the first physical layer module, the second physical layer module and the protocol stack module enter the idle mode, the protocol stack module sends corresponding measurement configuration information to each of the physical layer modules, that is to say, first measurement configuration information is sent to the first physical layer module and second measurement configuration information is sent to the second physical layer module, and then the first and second physical layer modules all enter the sleep state. When a preset period reaches, the first physical layer module switches from the sleep state to the wake-up state, so that after receiving paging, target neighbor frequency points can be determined, for measuring and evaluating the signal quality of neighbor cells, as described above. Further, a first neighbor frequency point is any one of the target neighbor frequency points, the first physical layer module generates first measurement feedback information according to an evaluation result and sends the first measurement feedback information to the protocol stack module, and the measurement feedback information includes a measurement result of signal quality of the current serving cell, or the first physical layer module directly enters the sleep state again. Moreover, when the first physical layer module completes the cell measurement, the second physical layer module can switch to the wake-up state and perform similar cell measurement, with the difference that the second physical layer module only measures the signal quality of the neighbor cells, and the second measurement feedback information finally sent to the protocol stack module only includes the measurement result of the neighbor cells. For the protocol stack module, after receiving the measurement feedback information sent by each of the first physical layer module and the second physical layer module, it can switch to a partial wake-up state to make cell reselection decision, and then switch to a full wake-up state to trigger cell reselection when cell reselection is determined.

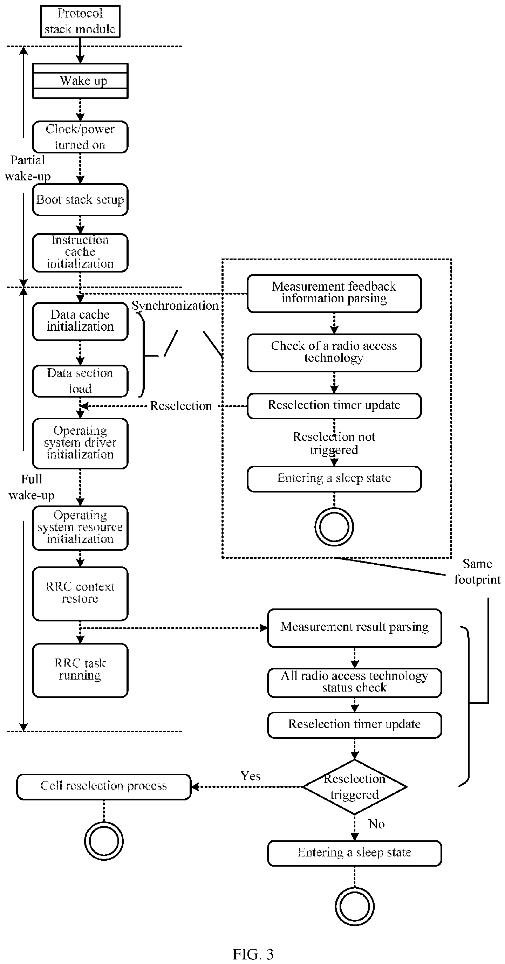

FIG. 3 illustrates a schematic flow chart of a cell reselection process implemented by a protocol stack module according to an embodiment of the present disclosure. As illustrated in FIG. 3, after receiving the measurement feedback information, the protocol stack module turns on clock/power, boots stack setup, and performs instruction cache initialization to realize partial wake-up. Then, during data cache initialization and data section load, cell reselection decision is made on the basis of the measurement feedback information. Specifically, the protocol stack module can parse the measurement feedback information, so as to further realize check of multi-radio access technology and update of a reselection timer, and finally determine whether to trigger reselection. In case of determining not reselection, the protocol stack module directly switches to the sleep state again, so it is not necessary to perform subsequent steps; and in case of reselection, the protocol stack module switches to the fully wake-up state, that is to say, the protocol stack module continues to perform initialization of a driver of an operating system, operating system resource initialization, and context restoration of radio resource control. After that, the protocol stack module can run task operation of radio resource control, perform relevant parsing and detection processes again, and trigger cell reselection or enter the sleep state.

An embodiment of the present disclosure provides a cell measurement method, which is applied to a radio communication apparatus, and the radio communication apparatus includes a first physical layer module and a protocol stack module, where the first physical layer module and the protocol stack module are in an idle mode. The method includes: in response to switching from a sleep state to a wake-up state and receiving paging, determining, by the first physical-layer module, target neighbor frequency points on the basis of acquired first measurement configuration information; measuring, by the first physical-layer module, signal quality of neighbor cells on each of the target neighbor frequency points, and evaluating obtained neighbor cell measurement results; and in response to the evaluation result being the neighbor cells including a reselectable cell, generating, by the first physical-layer module, measurement feedback information on the basis of a first measurement result corresponding to the reselectable cell of the neighbor cell measurement results, and sending the measurement feedback information to the protocol stack module. In the cell measurement method according to the embodiment of the present disclosure, the physical layer module of the radio communication apparatus can independently realize all the measurement processes of the cell, and selectively send the measurement feedback information to the protocol stack module according to the measurement result, which reduces information interaction between the modules and reducing the power consumption of the radio communication apparatus.

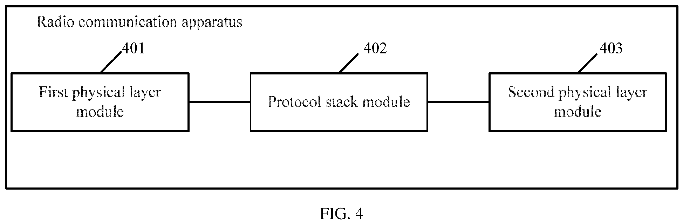

An embodiment of the present disclosure provides a radio communication apparatus. FIG. 4 illustrates a schematic structural view of a radio communication apparatus according to an embodiment of the present disclosure. As illustrated in FIG. 4, the radio communication apparatus includes a first physical layer module 401 and a protocol stack module 402, which are in an idle mode.

The first physical layer module 401 is configured to: in response to switching from a sleep state to a wake-up state and receiving paging, determine target neighbor frequency points on the basis of acquired first measurement configuration information; measure signal quality of neighbor cells on each of the target neighbor frequency points, and evaluate obtained neighbor cell measurement results; and in response to the evaluation result being the neighbor cells including a reselectable cell, generate measurement feedback information on the basis of a first measurement result corresponding to the reselectable cell of the neighbor cell measurement results, and send the measurement feedback information to the protocol stack module.

In an embodiment of the present disclosure, the protocol stack module 402 is further configured: in response to the protocol stack module 402 and the first physical layer module 401 entering the idle mode, determine the first measurement configuration information according to a radio access technology corresponding to the first physical layer module 401, and send the first measurement configuration information to the first physical layer module 401; and enter the sleep state, in response to having sent the first measurement configuration information; and the first physical layer module 401 is further configured to enter the sleep state, in response to receiving the first measurement configuration information.

In an embodiment of the present disclosure, the first physical layer module 401 is specifically configured to: measure signal quality of a current serving cell to obtain a second measurement result, in response to matching with the current serving cell; determine a cell selection criterion on the basis of the cell selection criteria parameter of the first measurement configuration information; select high-priority neighbor frequency points from preset neighbor frequency points of the first measurement configuration information, in response to the second measurement result meeting the cell selection criterion, and determine the selected high-priority neighbor frequency points as the target neighbor frequency points; and determine the preset neighbor frequency points as the target neighbor frequency points, in response to the second measurement result not meeting the cell selection criterion.

In an embodiment of the present disclosure, the first physical layer module 401 is specifically configured to: determine the preset neighbor frequency points of the first measurement configuration information as the target neighbor frequency points, in response to not matching with the current serving cell.

In an embodiment of the present disclosure, the first physical layer module 401 is specifically configured to: check a first detection period corresponding to a first neighbor frequency point of the first measurement configuration information, and detect a cell on the first neighbor frequency point within the first detection period to obtain a first cell, the first neighbor frequency point being any one of the target neighbor frequency points; and update a first measurement period corresponding to the first neighbor frequency point of the first measurement configuration information, and measure signal quality of the first cell within the updated first measurement period to obtain a partial measurement result of the neighbor cell measurement results.

In an embodiment of the present disclosure, the first physical layer module 401 is specifically configured to: check an evaluation period of the first measurement configuration information, and evaluate the neighbor cell measurement results within the evaluation period to obtain an evaluation result.

In an embodiment of the present disclosure, the first physical layer module 401 is specifically configured to: in response matching with the current serving cell, obtain a second measurement result corresponding to the current serving cell, and generate the measurement feedback information according to the first measurement result and the second measurement result.

In an embodiment of the present disclosure, the protocol stack module 402 is configured to: switch from the sleep state to a partial wake-up state, in response to receiving the first measurement result; and make cell reselection decision on the basis of the measurement feedback result in the partially wake-up state.

In an embodiment of the present disclosure, the protocol stack module 402 is specifically configured to: parse the measurement feedback result to obtain a parsing result; perform reselection parsing on the basis of the parsing result to obtain a reselection parsing result; in response to the reselection parsing result being reselection, switch from the partial wake-up state to a fully wake-up state, and perform cell reselection in the fully wake-up state; and in response to the reselection parsing result being not reselection, switch from the partial wake-up state to the sleep state.

In an embodiment of the present disclosure, the protocol stack module 402 is further configured to send mode indication information to the first physical layer module 401, when making the cell reselection decision on the basis of the measurement feedback result, where the mode indication information is configured to instruct the first physical layer module 401 to directly send a measurement result obtained by measuring the neighbor cells after the neighbor cell measurement results to the protocol stack module.

In an embodiment of the present disclosure, the first physical layer module 401 is further configured to switch from the wake-up state to the sleep state, in response the evaluation result being the neighbor cells not including a reselectable cell.

The above device may further include a second physical layer module 403, which is in an idle mode.

The second physical layer module 403 is configured to switch from a sleep state to a wake-up state and receive paging, when the first physical layer module 401 completes cell measurement and the second physical layer module 403 is allocated with a radio frequency resource; and is configured to, in the wake-up state, perform cell measurement on the basis of second measurement configuration information sent by the protocol stack module 402 when entering the idle mode.

The embodiment of the present disclosure provides a radio communication apparatus, which includes a first physical layer module and a protocol stack module, where the first physical layer module and the protocol stack module are in an idle mode. The first physical layer module is configured to: in response to switching from a sleep state to a wake-up state and receiving paging, determine target neighbor frequency points on the basis of acquired first measurement configuration information; measure signal quality of neighbor cells on each of the target neighbor frequency points, and evaluate obtained neighbor cell measurement results; and in response to the evaluation result being the neighbor cells including a reselectable cell, generate measurement feedback information on the basis of a first measurement result corresponding to the reselectable cell of the neighbor cell measurement results, and send the measurement feedback information to the protocol stack module. The physical layer module of the radio communication apparatus provided by the embodiments of the present disclosure can independently realize all the measurement processes of the cell, and selectively send the measurement feedback information to the protocol stack module according to the measurement result, which reduces information interaction between the modules and reducing the power consumption of the radio communication apparatus.

An embodiment of the present disclosure provides a computer-readable storage medium having a computer program stored therein, and the computer program is configured to cause, when being executed by a processor, the processor to implement the above cell measurement method. The computer-readable storage medium may be a volatile memory, such as a random-access memory (RAM); or a non-volatile memory, such as a read-only memory (ROM), a flash memory, a hard disk drive (HDD), or a solid-state drive (SSD); or a separate device including one or any combination of the above memories, such as a mobile phone, a computer, a tablet device, or a personal digital assistant.

Those skilled in the art should understand that the embodiments of the present disclosure may be embodied as methods, systems, or computer program products. Therefore, the present disclosure can take the form of a hardware embodiment, a software embodiment, or an embodiment combining software and hardware aspects. Moreover, the present disclosure can take the form of a computer program product implemented on one or more computer-usable storage media (including but not limited to a magnetic disk storage or an optical storage) containing computer-usable program codes therein.

The present disclosure is described with reference to implementation flow diagrams and/or block diagrams of methods, apparatuses (systems) and computer program products according to the embodiments of the present disclosure. It should be understood that each process and/or block in the flowchart and/or block diagram, and combinations of processes and/or blocks in the flowchart and/or block diagram, can be implemented by computer program instructions. These computer program instructions may be provided to a processor of a general-purpose computer, a special-purpose computer, an embedded processor or other programmable data processing apparatus to produce a machine, such that the instructions executed by the processor of the computer or other programmable data processing apparatus produce an apparatus for implementing the functions specified in one or more processes in the flow diagram and/or one or more blocks in the block diagram.

These computer program instructions may also be stored in a computer-readable memory that can direct a computer or other programmable data processing apparatus to function in a particular manner, such that the instructions stored in the computer-readable memory produce an article of manufacture including an instruction devices that implements the functions specified in one or more processes in the flow diagram and/or one or more blocks in the block diagram.

These computer program instructions may also be loaded onto a computer or other programmable data processing apparatus, such that a series of operational blocks are performed on the computer or other programmable apparatus to produce a computer-implemented process, such that the instructions executed on the computer or other programmable apparatus provide blocks for implementing the functions specified in one or more processes in the flow diagram and/or one or more blocks in the block diagram.

The above is merely the specific implementations of the present disclosure, but the scope of protection of the present disclosure is not limited thereto. Any change or replacement that can be easily thought of by a person familiar with this technical field within the technical scope disclosed in the present disclosure should be covered by the present disclosure. Therefore, the scope of protection of the present disclosure should be based on the scope of protection of the claims.

### INDUSTRIAL APPLICABILITY

An embodiment of the present disclosure provides a cell measurement method, which is applied to a radio communication apparatus, and the radio communication apparatus includes a first physical layer module and a protocol stack module, where the first physical layer module and the protocol stack module are in an idle mode. The method includes: in response to switching from a sleep state to a wake-up state and receiving paging, determining, by the first physical-layer module, target neighbor frequency points on the basis of acquired first measurement configuration information; measuring, by the first physical-layer module, signal quality of neighbor cells on each of the target neighbor frequency points, and evaluating obtained neighbor cell measurement results; and in response to the evaluation result being the neighbor cells including a reselectable cell, generating, by the first physical-layer module, measurement feedback information on the basis of a first measurement result corresponding to the reselectable cell of the neighbor cell measurement results, and sending the measurement feedback information to the protocol stack module. In the cell measurement method according to the embodiment of the present disclosure, the physical layer module of the radio communication apparatus can independently realize all the measurement processes of the cell, and selectively send the measurement feedback information to the protocol stack module according to the measurement result, which reduces information interaction between the modules and reducing the power consumption of the radio communication apparatus.

## Claims

1. A cell measurement method, implemented by a radio communication apparatus, the radio communication apparatus comprising a first physical layer module and a protocol stack module, the first physical layer module and the protocol stack module being in an idle mode, the method comprising:
determining, by the first physical layer module, target neighbor frequency points on the basis of acquired first measurement configuration information, in response to switching from a sleep state to a wake-up state and receiving paging;
measuring, by the first physical module, signal quality of neighbor cells on each of the target neighbor frequency points, and evaluating obtained neighbor cell measurement results; and
in response to an evaluation result being the neighbor cells comprising a reselectable cell, generating, by the first physical layer module, measurement feedback information on the basis of a first measurement result corresponding to the reselectable cell of the neighbor cell measurement results, and sending the measurement feedback information to the protocol stack module.

2. The method according to claim 1, wherein before the determining, by the first physical layer module, target neighbor frequency points on the basis of acquired first measurement configuration information, in response to switching from a sleep state to a wake-up state and receiving paging, the method further comprises:
in response to the protocol stack module and the first physical layer module entering the idle mode, determining, by the protocol stack module, the first measurement configuration information according to a radio access technology corresponding to the first physical layer module, and sending the first measurement configuration information to the first physical layer module;
in response to having sent the first measurement configuration information, entering, by the protocol stack module, the sleep state; and
in response to receiving the first measurement configuration information, entering, by the first physical layer module, the sleep state.

3. The method according to claim 1, wherein the determining, by the first physical layer module, target neighbor frequency points on the basis of acquired first measurement configuration information comprises:
in response to matching with a current serving cell, measuring, by the first physical layer module, signal quality of the current serving cell to obtain a second measurement result;
determining, by first physical layer module, a cell selection criterion on the basis of a cell selection criteria parameter of the first measurement configuration information;
in response to the second measurement result meeting the cell selection criterion, selecting, by the first physical layer module, high-priority neighbor frequency points from preset neighbor frequency points of the first measurement configuration information, and determining the selected frequency points as the target neighbor frequency points; and
in response to the second measurement result not meeting the cell selection criterion, determining, by the first physical layer module, the preset neighbor frequency points as the target neighbor frequency points.

4. The method according to claim 1, wherein the determining, by the first physical layer module, target neighbor frequency points on the basis of acquired first measurement configuration information comprises:
in response to not matching with the current serving cell, determining, by the first physical layer module, preset neighbor frequency points of the first measurement configuration information as the target neighbor frequency points.

5. The method according to claim 1, wherein the measuring, by the first physical module, signal quality of neighbor cells on each of the target neighbor frequency points comprises:
checking, by the first physical layer module, a first detection period corresponding to a first neighbor frequency point of the first measurement configuration information, and detecting a cell on the first neighbor frequency point within the first detection period to obtain a first cell, the first neighbor frequency point being any one of the target neighbor frequency points; and
updating, by the first physical layer module, a first measurement period corresponding to the first neighbor frequency point of the first measurement configuration information, and measuring signal quality of the first cell within the updated first measurement period to obtain a partial measurement result of the neighbor cell measurement results.

6. The method according to claim 1, wherein the evaluating obtained neighbor cell measurement results comprises:
checking, by the first physical layer module, an evaluation period of the first measurement configuration information, and evaluating the neighbor cell measurement results within the evaluation period to obtain the evaluation result.

7. The method according to claim 1, wherein the generating, by the first physical layer module, measurement feedback information on the basis of a first measurement result corresponding to the reselectable cell of the neighbor cell measurement results comprises:
in response to matching with a current serving cell, obtaining, by the first physical layer module, a second measurement result corresponding to the current serving cell, and generating the measurement feedback information according to the first measurement result and the second measurement result.

8. The method according to claim 1, wherein after the generating, by the first physical layer module, measurement feedback information on the basis of a first measurement result corresponding to the reselectable cell of the neighbor cell measurement results, and sending the measurement feedback information to the protocol stack module, the method further comprises:
in response to receiving the measurement feedback information, switching, by the protocol stack module, from the sleep state to a partial wake-up state; and
in the partial wake-up state, making, by the protocol stack module, cell reselection decision on the basis of the measurement feedback result.

9. The method according to claim 8, wherein the making, by the protocol stack module, cell reselection decision on the basis of the measurement feedback result comprises:
parsing, by the protocol stack module, the measurement feedback result to obtain a parsing result;
performing, by the protocol stack module, reselection parsing on the basis of the parsing result to obtain a reselection parsing result;
in response to the reselection parsing result being reselection, switching, by the protocol stack module, from the partial wake-up state to a fully wake-up state, and performing cell reselection in the fully wake-up state; and
in response to the reselection parsing result being not reselection, switching, by the protocol stack module, from the partial wake-up state to the sleep state.

10. The method according to claim 8, further comprising:
sending, by the protocol stack module, mode indication information to the first physical layer module when making the cell reselection decision on the basis of the measurement feedback result;
wherein the mode indication information is configured to instruct the first physical layer module to directly send measurement result obtained by measuring the neighbor cells after the neighbor cell measurement results to the protocol stack module.

11. The method according to claim 1, wherein after the measuring, by the first physical module, signal quality of neighbor cells on each of the target neighbor frequency points, and evaluating obtained neighbor cell measurement results, the method further comprises:
in response to the evaluation result being the neighbor cells not comprising the reselectable cell, switching, by first physical layer module, from the wake-up state to the sleep state.

12. The method according to claim 1, wherein the radio communication apparatus further comprises a second physical layer module, the second physical layer module is in the idle mode, and the method further comprises:
in response to allocating a radio frequency resource and the first physical layer module having completed cell measurement, switching, by the second physical layer module, from the sleep state to the wake-up state and receiving paging; and
in the wake-up state, performing, by the second physical layer module, cell measurement on the basis of second measurement configuration information sent by the protocol stack module when the second physical layer module enters the idle mode.

13. A radio communication apparatus, comprising a first physical layer module and a protocol stack module, the first physical layer module and the protocol stack module being in an idle mode; the first physical layer module is configured to:
determine target neighbor frequency points on the basis of acquired first measurement configuration information, in response to switching from a sleep state to a wake-up state and receiving paging;
measure signal quality of neighbor cells on each of the target neighbor frequency points, and evaluate obtained neighbor cell measurement results; and
in response to an evaluation result being the neighbor cells comprising a reselectable cell, generate measurement feedback information on the basis of a first measurement result corresponding to the reselectable cell of the neighbor cell measurement results, and send the measurement feedback information to the protocol stack module.

14. The device according to claim 13, wherein the protocol stack module is further configured to: in response to the protocol stack module and the first physical layer module entering the idle mode, determine the first measurement configuration information according to a radio access technology corresponding to the first physical layer module, and send the first measurement configuration information to the first physical layer module; and in response to having sent the first measurement configuration information, enter the sleep state; and
the first physical layer module is further configured to: in response to receiving the first measurement configuration information, enter the sleep state.

15. The device according to claim 13, wherein the first physical layer module is specifically configured to:
in response to matching with a current serving cell, measure signal quality of the current serving cell to obtain a second measurement result;
determine a cell selection criterion on the basis of a cell selection criteria parameter of the first measurement configuration information;
in response to the second measurement result meeting the cell selection criterion, select high-priority neighbor frequency points from preset neighbor frequency points of the first measurement configuration information, and determine the selected frequency points as the target neighbor frequency points; and
in response to the second measurement result not meeting the cell selection criterion, determine the preset neighbor frequency points as the target neighbor frequency points.

16. The device according to claim 13, wherein the first physical layer module is specifically configured to: in response to not matching with the current serving cell, determine preset neighbor frequency points of the first measurement configuration information as the target neighbor frequency points.

17. The device according to claim 13, wherein the first physical layer module is specifically configured to:
check a first detection period corresponding to a first neighbor frequency point of the first measurement configuration information, and detect a cell on the first neighbor frequency point within the first detection period to obtain a first cell, the first neighbor frequency point being any one of the target neighbor frequency points; and
update a first measurement period corresponding to the first neighbor frequency point of the first measurement configuration information, and measure signal quality of the first cell within the updated first measurement period to obtain a partial measurement result of the neighbor cell measurement results.

18. The device according to claim 13, wherein the first physical layer module is specifically configured to:
check an evaluation period of the first measurement configuration information, and evaluating the neighbor cell measurement results within the evaluation period to obtain the evaluation result.

19. The device according to claim 13, wherein the first physical layer module is specifically configured to:
in response to matching with a current serving cell, obtain a second measurement result corresponding to the current serving cell, and generate the measurement feedback information according to the first measurement result and the second measurement result.

20. A computer-readable storage medium having stored a computer program therein, the computer program is configured to, when executed by a processor, implement the cell measurement method according to any one of claims 1-12.
